# EUROPÄISCHE PATENTSCHRIFT

(11) **EP 0 671 986 B1**
(45) Veröffentlichungstag und Bekanntmachung des Hinweises auf die Patenterteilung: **03.06.1998**
(21) Anmeldenummer: 94926056.6
(22) Anmeldetag: 16.09.1994
(51) Int. Cl.: B21F 27/20

(54) **DRAHTEINBRINGVORRICHTUNG**
WIRE-INSERTION DEVICE
DISPOSITIF D'INSERTION D'UN FIL METALLIQUE

(30) Priorität: 01.10.1993 AT 1974/93
(43) Veröffentlichungstag der Anmeldung: 20.09.1995
(73) Patentinhaber: EVG Entwicklungs- u. Verwertungs- Gesellschaft m.b.H., A-8074 Raaba (AT)
(72) Erfinder: RITTER, Klaus, A-8042 Graz (AT); RITTER, Gerhard, A-8043 Graz (AT)
(74) Vertreter: Holzer, Walter, Dipl.-Ing.
(86) Internationale Anmeldenummer: AT9400132
(87) Internationale Veröffentlichungsnummer: WO9509704

(56) Entgegenhaltungen:
- EP-A- 0 389 465
- AT-A- 372 886

## Beschreibung

Die Erfindung betrifft eine Vorrichtung zum Einbringen von Draht in einen intermittierend vorgeschobenen Isolierkörper eines Bauelementes, mit einer auf einer schwenkbaren Grundplatte angeordneten Drahtzuführeinrichtung und mit einer Einrichtung zum Aus formen eines Drahtaufnahmekanals, wobei die Ausformeinrichtung in Vorschubrichtung des Bauelementes vor der Drahtzuführeinrichtung und auf derselben Seite des Isolierkörpers sowie unter dem gleichen Winkel wie diese angeordnet ist und ein Stechwerkzeug aufweist.

Bei einer aus der EP-A-0 389 465 bekannten Vorrichtung dieser Art ist die Drahtzuführeinrichtung auf einem Grundrahmen und von dieser getrennt eine längsverschiebbare und synchron mit der Drahtzuführeinrichtung verschwenkbare Einrichtung zum Ausformen eines Drahtaufnahmekanals im Isolierkörper angeordnet. In vertikaler Richtung können mehrere Ausformeinrichtungen übereinanderliegend vorgesehen werden. Die bekannte Vorrichtung hat den Nachteil, daS die Ausformeinrichtung von der Drahtzuführeinrichtung getrennt angeordnet ist und deshalb getrennt angesteuert und verschoben werden muß und daS der Abstand zwischen der Ausformeinrichtung und der Drahtzuführeinrichtung fest vorgegeben ist.

Die Erfindung zielt darauf ab, eine Vorrichtung der einleitend angegebenen Art zu schaffen, welche die geschilderten Nachteile vermeidet und eine gemeinsame Betätigung der Ausformeinrichtung und Drahtzuführeinrichtung sowie eine rasche Anpassung derselben an unterschiedliche Abmessungen des Isolierkörpers und unterschiedliche Stegdrahtteilungen des Bauelementes ermöglicht. Die erfindungsgemaße Vorrichtung zeichnet sich dadurch aus, daß die Ausformeinrichtung mit der Drahtzuführeinrichtung fest gekoppelt gemeinsam mit dieser in Richtung zum Isolierkörper des Bauelementes hin und von diesem weg bewegbar sowie gemeinsam mit der Drahtzuführeinrichtung verschwenkbar ist und und zumindest eine in wählbarem Abstand zur Drahtzufuhreinrichtung fixierbare, das Stechwerkzeug bildende Vorstechnadel zum Ausformen des Aufnahmekanals im Isolierkörper aufweist.

Gemäß einer in konstruktiver Hinsicht besonders bevorzugten Ausführungsform der Erfindung ist auf der schwenkbaren Grundplatte ein in Richtung zum Isolierkörper hin und von diesem weg verschiebbarer Schlitten vorgesehen, der zumindest eine Vorschubklemme zum Vorschieben eines Stegdrahtes aufweist und die Vorstechnadel trägt.

Nach einem weiteren vorteilhaften Merkmal der Erfindung weist der Schlitten eine seitlich auskragende Einstellschiene auf, auf der ein Vorstechbalken zur Aufnahme zumindest einer Vorstechnadel angeordnet ist, die am Vorstechbalken längsverschiebbar und mittels einer Klemmeinrichtung fixierbar ist.

Erfindungsgemäß ist der Abstand zwischen der Vorstechnadel und der durch die Vorschubklemme definierten Einschußlinie des Stegdrahtes entsprechend der Stegdrahtteilung im Bauelement und/oder entsprechend einem Vielfachen derselben wählbar.

Gemäß einer speziellen Ausführungsform der Erfindung ist vorgesehen, daß der Stegdraht mittels der Vorschubklemme und der Rücklaufsperre von einem endlosen Drahtvorrat abziehbar und mittels der aus einer Schneiddüse und einem Schneidmesser bestehenden Schneideinrichtung vom Drahtvorrat abtrennbar ist und daß jede Vorstechnadel gemeinsam mit der zugehörigen Rücklaufsperre sowie der Schneiddüse der zugehörigen Schneideinrichtung in einer gemeinsamen horizontalen Ebene liegt.

Durch die Erfindung wird erreicht, daß die erforderlichen Stegdrähte durch den Isolierkörper mit der jeweils erforderlichen Teilung problemlos und mit großer Genauigkeit hindurchgeführt werden können, wobei die Ansteuerung der einzelnen Einrichtungen auf einfache Weise erfolgen kann.

Weitere vorteilhafte Merkmale und Vorteile der Erfindung werden nachfolgend an einem Ausführungsbeispiel unter Bezugnahme auf die Zeichnungen näher erläutert. Es zeigen:
Fig. 1 einen schematischen Horizontalschnitt der erfindungsgemäßen Vorrichtung, wobei in der oberen Zeichnungshälfte eine Vorstechnadel sowie ein zuzuführender Stegdraht während ihrer Bewegung durch den Isolierkörper gezeigt sind, und
Fig. 2 in einer Seitenansicht einen Ausschnitt eines Vorstechbalkens mit mehreren Vorstechnadeln.

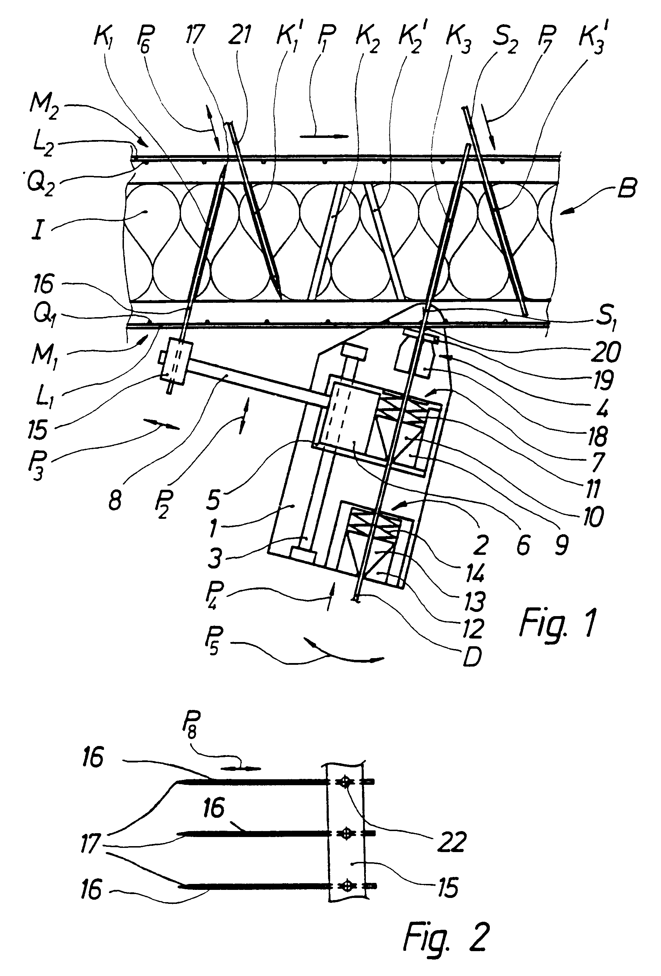

Die Vorrichtung nach Fig. 1 wird bei der Herstellung eines Bauelementes B verwendet, das beispielsweise in der AT-PS 372 886 erläutert ist. Das Bauelement B besteht aus zwei beiderseits eines Isolierkörpers I angeordneten ebenen Drahtgittermatten M₁ und M₂, die aus senkrecht zueinander verlaufenden, miteinander verschweißten Längsdrähten L₁ bzw. L₂ und Querdrähten Q₁ bzw. Q₂ gebildet sind, wobei die Drahtgittermatten M₁ und M₂ durch Stegdrähte S₁ und S₂ zu einer formstabilen Einheit verbunden sind.

Im Rahmen der Erfindung können anstelle der Drahtgittermatten M₁ und M₂ auch aus miteinander verschweißten Längs- und Querdrähten bestehende Drahtgitterbahnen Verwendung finden, wobei diese am Ende des Herstellvorganges zerschnitten werden, um Bauelemente vorbestimmter Länge zu bilden. Während des Herstellvorganges werden die Drahtgittermatten M₁ und M₂ bzw. die entsprechenden Drahtgitterbahnen gemeinsam mit dem Isolierkörper I entsprechend dem Pfeil P₁ schrittweise vorgeschoben.

Die Vorrichtung weist eine Grundplatte 1 auf, die zumindest eine Rücklaufsperre 2, eine in Richtung zum Bauelement B hin verlaufende Führungsschiene 3 und zumindest eine Schneideinrichtung 4 trägt. Auf der Führungsschiene 3 ist ein Schlitten 5 mit Hilfe einer nicht dargestellten Antriebseinrichtung, z.B. Arbeitszylinder, Kurbeltrieb, Motorantrieb u.dgl., entsprechend dem Doppelpfeil P₂ verschiebbar. Auf dem Schlitten 5 sind zum Zuführen eines den Stegdraht S₁ bildenden Drahtes D ein vertikaler Vorzugbalken 6 mit zumindest einer als Drahtzuführeinrichtung wirkenden Vorschubklemme 7 sowie eine seitlich auskragende Einstellschiene 8 angeordnet.

Jede Vorschubklemne 7 hat zwei keilförmige, mit dem Vorzugbalken 6 fest verbundene Vorzugbacken 9, zwei mit den Vorzugbacken 9 zusammenwirkende, bewegliche keilförmige Klemmbacken 10 sowie eine die Klemmbacken 10 gegen die Vorzugbacken 9 drückende Feder 11. Die auf der Grundplatte 1 angeordnete Rücklaufsperre 2 ist analog zur Vorschubklemme 7 aufgebaut und weist zwei keilförmige, mit der Grundplatte 1 fest verbundene Sperrbacken 12, zwei mit den Sperrbacken 12 zusammenwirkende, bewegliche keilförmige Klemmbacken 13 sowie eine die Klemmbacken 13 gegen die Sperrbacken 12 drückende Feder 14 auf.

Am auskragenden Ende der Einstellschiene 8 ist ein vertikaler vorstechbalken 15 angeordnet, der mit Hilfe nicht dargestellter Antriebsmittel, wie beispielsweise Arbeitszylinder, verstellspindel u.dgl., entsprechend dem Doppelpfeil P₃ verstellbar und auf der Einstellschiene 8 fixierbar ist. Am Vorstechbalken 15 ist zumindest eine Vorstechnadel 16 derart angebracht, daS sie sich senkrecht zur Einstellschiene 8 und senkrecht zum Vorstechbalken 15 mit ihrem freien, auskragenden Ende in Richtung gegen das Bauelement B erstreckt. Die Querschnittsform der Vorstechnadel 16 ist vorzugsweise rund, wobei der Durchmesser der Vorstechnadel 16 zumindest gleich dem Durchmesser des durch den Isolierkörper hindurchzuführenden Stegdrahtes S₁, vorzugsweise jedoch größer als der Durchmesser des Stegdrahtes S₁ ist. An ihrem freien Ende ist die Vorstechnadel 16 mit einer verschleißfesten, vorzugsweise gehärteten Spitze 17 versehen.

Die geschilderte Vorrichtung arbeitet in folgender Weise: Durch die Vorschubbewegung des Schlittens 5 in der dem Bauelement B zugekehrten Richtung des Doppelpfeiles P₂ wird die Vorstechnadel 16 gegen das Bauelement B bewegt. Dabei dringt die Spitze 17 in den Isolierkörper I ein und formt während der Vorschubbewegung einen Aufnahmekanal K₁ im Isolierkörper I. Die Vorschubbewegung des Schlittens 5 wird dann beendet, wenn die Spitze 17 den Isolierkörper I vollständig durchdrungen hat und auf der gegenüberliegenden Seite des Isolierkörpers I ausgetreten ist. Um das Durchdringen des Isolierkörpers I zu erleichtern, kann die Vorstechnadel 16 oder aber nur die Spitze 17 derselben, beispielsweise mittels Induktionsspule oder ähnlich einem Lötkolben mittels einer Heizpatrone, vorgewärmt werden.

Gleichzeitig mit der Vorschubbewegung der Vorstechnadel 16 wird der Draht D infolge der Vorschubbewegung des Schlittens 5 mit Hilfe der Vorschubklemme 7 von einer nicht dargestellten Vorratsspule abgezogen und entsprechend dem Pfeil P₄ entlang einer durch die Vorzugbacken 9 und deren Vorschubbewegung definierten Einschußlinie vorgeschoben.

Durch die Vorschubbewegung der Vorschubklemme 7 zum Bauelement B hin werden die Klemmbacken 10 infolge der keilförmigen Ausbildung der sie aufnehmenden Vorzugbacken 9 zusätzlich zur Wirkung der Feder 11 an den Stegdraht S₁ angepreßt und nehmen diesen mit. Die Klemmbacken 10 sind zur Erhöhung des Reibschlusses mit dem Stegdraht S₁ auf ihrer dem Stegdraht S₁ zugekehrten Seite zusätzlich mit einer Verzahnung versehen. Gleichzeitig schiebt der Stegdraht S₁ während seines Vorschubes die Klemmbacken 13 der Rücklaufsperre 2 gegen die Feder 14 und zum breiteren Ende der keilförmigen Öffnung der Sperrbacken 12 hin, so daß die Sperrbacken 12 der Vorschubbewegung des Stegdrahtes S₁ praktisch keinen Widerstand entgegensetzen. Der Stegdraht S₁ wird durch eine mit der Einschußlinie fluchtenden Schneiddüse 18 der Schneideinrichtung 4 und durch einen in einem vorherigen Arbeitstakt mit Hilfe der Vorstechnadel 16 im Isolierkörper I ausgeformten Aufnahmekanal K₃ hindurchgeführt. Die Vorschubbewegung des Stegdrahtes S₁ wird solange fortgesetzt, bis das Anfangsstück des Stegdrahtes S₁ knapp über die Ebene der Drahtgittermatte M₂ hinausragt und dadurch in einem folgenden Arbeitsschritt mit den entsprechenden Drähten L₂ bzw. Q₂ der Drahtgittermatte M₂ verschweißt werden kann. Die Länge der Vorschubstrecke der Vorstechnadel 16 und des Stegdrahtes S₁ stimmen genau überein. Nach Beendigung der Vorschubbewegung wird der Stegdraht S₁ mit Hilfe eines Schneidmessers 19 der Schneideinrichtung 4 vom Draht D abgetrennt und anschließend an seinem der Schneideinrichtung 4 abgekehrten Ende mit einem entsprechenden Gitterdraht L₂ bzw. Q₂ der Drahtgittermatte M₂ verschweißt.

Der Schlitten 5 kehrt in seine Ausgangslage zurück, wobei die Vorstechnadel 16 aus dem Aufnahmekanal K₁ herausgezogen wird und die Klemmbacken 10 der Vorschubklemme 7 den Draht D freigeben, während nunmehr die Klemmbacken 13 der Rücklaufsperre 2 den Materialstrang in seiner Lage festhalten und ein Zurückschieben desselben in Richtung Vorratsspule verhindern.

Im Rahmen der Erfindung ist es auch möglich, einen bereits abgelängten, gerichteten Stegdraht einem Vorratsmagazin zu entnehmen und mit Hilfe der Drahtzuführeinrichtung entlang der Einschußlinie in den vorgeformten Aufnahmekanal K₃ einzuführen. In diesem Fall bleiben die Rücklaufsperre 2 und die Schneideinrichtung 4 außer Funktion.

Die Grundplatte 1 ist im Drehpunkt 20 entsprechend dem Doppelpfeil P₅ schwenkbar gelagert, so daß beliebige Winkel zwischen den Stegdrähten S₁ und der Vorstechnadel 16 einerseits und den Längsdrähten L₁, L₂ der Drahtgittermatten M₁, M₂ anderseits einstellbar sind.

Der Abstand der Vorstechnadel 16 zur Einschußlinie des Stegdrahtes S₁ entspricht der gewünschten Stegdrahtteilung im Bauelement B, kann jedoch im Rahmen der Erfindung auch ein Vielfaches derselben betragen. Da innerhalb eines Bauelementes bzw. bei der Herstellung von Bauelementen aus endlosen Drahtgitterbahnen die Stegdrahtteilung unterschiedlich sein kann, wird während des Herstellvorganges zwischen den Arbeitstakten der Vorrichtung und vorzugsweise während des Vorschubes des Bauelementes B zwecks Anpassung an verschiedene Stegdrahtteilungen der Vorstechbalken 15 entsprechend dem Doppelpfeil P₃ auf der Einstellschiene 8 verschoben und dort in der neuen Arbeitsstellung fixiert. Ein mit einer unterschiedlichen Stegdrahtteilung ausgeformter Aufnahmekanal ist in Fig. 1 mit K₂ bezeichnet.

Bei der Herstellung der Bauelemente B werden die Stegdrähte in den meisten Fällen von den beiden gegenüberliegenden Seiten des Bauelementes B zugeführt, so daß auf beiden Seiten des herzustellenden Bauelementes eine Vorrichtung gemäß der Erfindung angeordnet wird. In Fig. 1 wurden der Übersicht halber nur eine zweite Vorstechnadel 21 und ein weiterer Stegdraht S₂ eingezeichnet. Die Vorstechnadel 21 bewegt sich entsprechend dem Doppelpfeil P₆, während der Stegdraht S₂ entsprechend dem Pfeil P₇ vorgeschoben wird. Die Bewegung der Vorstechnadel 21 in Richtung zum Bauelement B und das Hindurchführen des Stegdrahtes S₂ durch den Isolierkörper I erfolgen gleichzeitig und gemeinsam. Die Vorstechnadel 21 und der Stegdraht S₂ sind in einer Momentaufnahme ihrer entsprechenden Vorschubbewegungen dargestellt, kurz bevor sie ihre Endlage erreichen. Die von dieser Seite im Isolierkörper I mit Hilfe der Vorstechnadel 21 ausgeformten Aufnahmekanäle für die Stegdrähte S₂ sind entsprechend den von der anderen Seite, wie oben geschildert, ausgeformten Aufnahmekanälen bezeichnet, jedoch zusätzlich mit einem Apostroph versehen.

Zum gleichzeitigen Zuführen mehrerer Stegdrähte pro Arbeitstakt werden am Vorzugbalken 6 mehrere Vorschubklemmen 7 mit wählbaren Abständen übereinander angeordnet, und in den entsprechenden Positionen mehrere zugehörige Rücklaufsperren 2 und Schneideinrichtungen 4 ortsfest übereinander auf der Grundplatte 1 angeordnet. Zum Ausformen der entsprechenden Aufnahmekanäle werden am Vorstechbalken 15, wie in Fig. 2 dargestellt, mehrere Vorstechnadeln 16 mit entsprechenden Abständen übereinander angeordnet. Jede Vorstechnadel 16 liegt zusammen mit der Einschußlinie der zugehörigen Vorschubklemme 7, der zugehörigen Schneiddüse 18 und der zugehörigen Rücklaufsperre 2 in einer horizontalen Ebene. Beim Einführen von vorabgelängten Stegdrähten in den Aufnahmekanal K₃ liegt jede Vorstechnadel 16 zusammen mit der dazugehörigen Einführeinrichtung in einer horizontalen Ebene.

Zwecks Anpassung an unterschiedliche Dicken des Isolierkörpers I können alle Vorstechnadeln 16 gemeinsam mittels einer nicht dargestellten Antriebseinrichtung, beispielsweise Verstellspindel, Antriebskette u.dgl., entsprechend dem Doppelpfeil P₈ in horizontaler Richtung verschoben werden. In ihrer Arbeitsstellung werden sie mittels einer Klemmvorrichtung 22, beispielsweise mit Hilfe einer Klemmschraube, im Vorstechbalken 15 fixiert.

## Patentansprüche

1. Vorrichtung zum Einbringen von Draht (D) in einen intermittierend vorgeschobenen Isolierkörper (I) eines Bauelementes (B), mit einer auf einer schwenkbaren Grundplatte (1) angeordneten Drahtzuführeinrichtung (6, 7) und mit einer Einrichtung (15, 16, 21) zum Ausformen eines Drahtaufnahmekanals, wobei die Ausformeinrichtung (15, 16, 21) in Vorschubrichtung des Bauelementes (B) vor der Drahtzuführeinrichtung (6, 7) und auf derselben Seite des Isolierkörpers (I) sowie unter dem gleichen Winkel wie diese angeordnet ist und ein Stechwerkzeug aufweist, dadurch gekennzeichnet, daß die Ausformeinrichtung (15, 16, 21) mit der Drahtzuführeinrichtung (6, 7) fest gekoppelt gemeinsam mit dieser in Richtung zum Isolierkörper (I) des Bauelementes (B) hin und von diesem weg bewegbar sowie gemeinsam mit der Drahtzuführeinrichtung (6, 7) verschwenkbar ist und zumindest eine in wählbarem Abstand zur Drahtzuführeinrichtung (6, 7) fixierbare, das Stechwerkzeug bildende Vorstechnadel (16, 21) zum Ausformen des Aufnahmekanals (K₁, K₂, K₃, K'₁, K'₂, K'₃) im Isolierkörper (I) aufweist.

2. Vorrichtung nach Anspruch 1, dadurch gekennzeichnet, daß auf der schwenkbaren Grundplatte (1) ein in Richtung zum Isolierkörper (I) hin und von diesem weg verschiebbarer Schlitten (5) vorgesehen ist, der zumindest eine Vorschubklemme (7) zum Vorschieben eines Stegdrahtes (S₁, S₂) aufweist und die Vorstechnadel (16, 21) trägt.

3. Vorrichtung nach Anspruch 2, dadurch gekennzeichnet, daß die Vorstechnadel (16, 21) eine verschleißfeste, vorzugsweise gehärtete Spitze (17) aufweist.

4. Vorrichtung nach einem der Ansprüche 2 oder 3, dadurch gekennzeichnet, daß die Vorstechnadel (16, 21) einen runden Querschnitt aufweist, wobei der Durchmesser der Vorstechnadel (16, 21) zumindest gleich dem Durchmesser des Stegdrahtes (S₁, S₂), vorzugsweise größer als der Durchmesser des Stegdrahtes (S₁, S₂) ist.

5. Vorrichtung nach einem der Ansprüche 2 bis 4, dadurch gekennzeichnet, daß die Vorstechnadel (16, 21) vorzugsweise in ihrer Spitze vorwärmbar ist.

6. Vorrichtung nach einem der Ansprüche 1 bis 5, dadurch gekennzeichnet, daß der Schlitten (5) eine seitlich auskragende Einstellschiene (8) aufweist, auf der ein Vorstechbalken (15) zur Aufnahme zumindest einer Vorstechnadel (16, 21) angeordnet ist, die am Vorstechbalken (15) längsverschiebbar und mittels einer Klemmeinrichtung (22) fixierbar ist.

7. Vorrichtung nach einem der Ansprüche 1 bis 6, dadurch gekennzeichnet, daS der Abstand zwischen der Vorstechnadel (16, 21) und der durch die Vorschubklemme (7) definierten Einschußlinie des Stegdrahtes (S₁, S₂) entsprechend der Stegdrahtteilung im Bauelement (B) und/oder entsprechend einem Vielfachen derselben wählbar ist.

8. Vorrichtung nach einem der Ansprüche 1 bis 7, dadurch gekennzeichnet, daß der Stegdraht (S₁, S₂) mittels der Vorschubklemme (7) und der Rücklaufsperre (2) von einem endlosen Drahtvorrat abziehbar und mittels der aus einer Schneiddüse (18) und einem Schneidmesser (19) bestehenden Schneideinrichtung (4) vom Drahtvorrat abtrennbar ist und daS jede Vorstechnadel (16, 21) gemeinsam mit der zugehörigen Rücklaufsperre (2) sowie der Schneiddüse (18) der zugehörigen Schneideinrichtung (4) in einer gemeinsamen horizontalen Ebene liegt.

9. Vorrichtung nach einem der Ansprüche 1 bis 8, dadurch gekennzeichnet, daS der Schlitten (5) einen Vorzugbalken (6) aufweist, der zumindest eine Vorschubklemme (7) trägt.

10. Vorrichtung nach einem der Ansprüche 1 bis 9, dadurch gekennzeichnet, daS in vertikaler Richtung mehrere Vorstechnadeln (16, 21) mit wählbarem Abstand am Vorstechbalken (15) sowie mehrere Vorschubklemmen (7) mit wählbarem Abstand am Vorzugbalken (6) angeordnet sind.

## Claims

1. Device for introducing wire (D) into an intermittently-fed insulating member (I) of a building component (B), with a wire feed device (6, 7) disposed on a pivotal base plate (1) and with a device (15, 16, 21) for shaping a wire-receiving channel, the shaping device (15, 16, 21) being disposed in the feed direction of the building component (B) in front of the wire feed device (6, 7) and on the same side of and at the same angle as the insulating member (I), and having a punching tool, characterised in that the shaping device (15, 16, 21), being securely coupled to the wire feed device (6, 7), is moveable therewith in the direction of the insulating member (I) of the building component (B) towards it and away from it, and is pivotal in common with the wire feed device (6, 7), and has at least one punching needle (16, 21), forming the punching tool, which is securable at a selectable distance from the wire feed device (6, 7), for shaping the receiving channel (K1, K2, K3, K'1, K'2, K'3) in the insulating member (I).

2. Device according to claim 1, characterised in that there is provided on the pivotal base plate (1) a slide (5) displaceable towards and away from the insulating member (I), and which has at least one feed clamp (7) for feeding a web wire (S₁, S₂), and carries the punching needle (16, 21).

3. Device according to claim 2, characterised in that the punching needle (16, 21) has a wear-resistant, preferably hardened point (17).

4. Device according to one of claims 2 or 3, characterised in that the punching needle (16, 21) has a circular cross-section, the diameter of the punching needle (16, 21) being at least equal to the diameter of the web wire (S₁, S₂), and is preferably greater than the diameter of the web wire (S₁, S₂ )_{.}

5. Device according to one of claims 2 to 4, characterised in that the point of the punching needle (16, 21) is preferably pre-heatable.

6. Device according to one of claims 1 to 5, characterised in that the slide (5) has a laterally projecting adjusting rail (8) upon which there is disposed a punch beam (15) for receiving at least one punching needle (16, 21), the latter being longitudinally movable on the punch beam (15) and being securable by means of a clamping device (22).

7. Device according to one of claims 1 to 6, characterised in that spacing between the punching needle (16, 21) and the insertion line of the web wire (S₁, S₂), defined by the feed clamp (7), is selectable in accordance with the division of the web wires in the building component (B) and/or in accordance with a multiple thereof.

8. Device according to one of claims 1 to 7, characterised in that the web wire (S₁, S₂)may be withdrawn by means of the feed clamp (7) and the non-return means (2) from an endless wire supply and may be separated from the wire supply by means of a cutting device (4) consisting of a cutting nozzle (18) and a cutter blade(19), and in that each punching needle (16, 21) lies, in common with the associated non-return means (2) and the cutting nozzle (18) of the associated cutting device (4), on a common horizontal plane.

9. Device according to one of claims 1 to 8, characterised in that the slide (5) has a projecting beam (6), which carries at least one feed clamp (7).

10. Device according to one of claims 1 to 9, characterised in that a plurality of punching needles (16, 21) are disposed in a vertical direction at a selectable spacing on the punch beam (15), and a plurality of feed clamps (7) are disposed on the feed beam (6) at a selectable spacing.

## Revendications

1. Dispositif pour l'insertion d'un fil (D) dans un corps isolant (I) avancé de façon intermittente, corps isolant (I) d'un élément de construction (B), avec un dispositif d'amenée de fil (6, 7) disposé sur une plaque de base basculante (1) et avec un dispositif (15, 16, 21) pour former un canal de réception de fil, le dispositif de formage (15, 16, 21) étant disposé dans la direction d'avance de l'élément de construction (B) en amont du dispositif d'amenée de fil (6, 7) et sur le même côté du corps isolant (I) ainsi que selon le même angle que celui-ci et dispositif qui comporte un outil de soyage, caractérisé en ce que le dispositif de formage (15, 16, 21) est solidement accouplé avec le dispositif d'amenée de fil (6, 7) et peut basculer avec celui-ci en direction du corps isolant (I) de l'élément de construction (B) en rapprochement et en éloignement de celui-ci ainsi que conjointement avec le dispositif d'amenée de fil (6, 7) et comporte au moins une broche (16, 21) formant l'outil de soyage pouvant être fixée à une distance sélective par rapport au dispositif d'amenée de fil (6, 7) pour former le canal de réception (K₁, K₂, K₃, K'₁, K'₂, K'₃) dans le corps isolant (I).

2. Dispositif selon la revendication 1, caractérisé en ce que sur la plaque de base pivotante (1), est prévu un chariot déplaçable dans la direction du corps isolant (I) en rapprochement et en éloignement de celui-ci, qui comporte au moins une pince d'avance (7) destinée à faire avancer un fil d'entretoise (S₁, S₂) et supporte la broche de soyage (16, 21).

3. Dispositif selon la revendication 2, caractérisé en ce que la broche de soyage (16, 21) comporte une pointe résistant à l'usure, de préférence trempée (17).

4. Dispositif selon l'une des revendications 2 ou 3, caractérisé en ce que la broche de soyage (16, 21) présente une section transversale ronde, le diamètre de la broche de soyage (16, 21) étant au moins égal au diamètre du fil d'entretoise (S₁, S₂) de préférence supérieur au diamètre du fil d'entretoise (S₁, S₂).

5. Dispositif selon l'une des revendications 2 à 4, caractérisé en ce que la broche de soyage (16, 21) peut de préférence être préchauffée au niveau de sa pointe.

6. Dispositif selon l'une des revendications 1 à 5, caractérisé en ce que le chariot (5) présente une glissière de réglage (8) latéralement en porte-à-faux sur laquelle est disposé un axe de soyage (15) pour la réception d'au moins une broche de soyage (16, 21) qui peut être fixée au niveau de l'axe de soyage (15) de façon mobile longitudinalement et au moyen d'un dispositif de serrage (22).

7. Dispositif selon l'une des revendications 1 à 6, caractérisé en ce que la distance entre la broche de soyage (16, 21) et la ligne d'insertion définie par la pince d'avance (7) du fil d'entretoise (S₁, S₂) peut être sélectionnée de façon correspondante au pas du fil d'entretoise dans l'élément de construction (B) et/ou selon un multiple de celui-ci.

8. Dispositif selon l'une des revendications 1 à 7, caractérisé en ce que le fil d'entretoise (S₁, S₂) peut être prélevé au moyen de la broche d'avance (7) et du dispositif anti-retour (2) à partir d'une réserve de fil sans fin et être séparé de la réserve de fil au moyen du dispositif de coupe (4) constitué par une tuyère de coupe (18) et une lame de coupe (19) et en ce que chaque broche de soyage (16, 21) se situe conjointement avec le dispositif anti-retour correspondant (2) ainsi que la tuyère de coupe (18) du dispositif de coupe correspondant (4) dans un plan horizontal commun.

9. Dispositif selon l'une des revendications 1 à 8, caractérisé en ce que le chariot (5) présente un axe d'avance (6) qui supporte au moins une pince d'avance (7).

10. Dispositif selon l'une des revendications 1 à 9, caractérisé en ce que dans la direction verticale, sont disposées plusieurs broches de soyage (16, 21) avec une distance sélective au niveau de l'axe de soyage (15) ainsi que plusieurs pinces d'avance (7) avec une distance sélective au niveau de l'axe d'avance (6).
